# EUROPÄISCHE PATENTANMELDUNG

(11) **EP 1 714 772 A1**
(43) Veröffentlichungstag der Anmeldung: **25.10.2006**
(21) Anmeldenummer: 05008635.4
(22) Anmeldetag: 20.04.2005
(51) Int. Cl.: B29C 70/34, B29C 70/46, B29C 70/08, B29C 70/50, B32B 5/06, B32B 5/26, D04H 13/00

(54) **Thermoplastisch verarbeitbarer Verbundwerkstoff**

(71) Anmelder: Quadrant Plastic Composites AG, 5600 Lenzburg (CH)
(72) Erfinder: Baser, Burak, 4600 Olten (CH)
(74) Vertreter: Felder, Peter

(57) **Zusammenfassung**

Die Erfindung betrifft einen thermoplastisch verarbeitbaren Verbundwerkstoff aus
A. mindestens einer Faservliesschicht aus Thermoplasstfasern und gegebenenfalls Verstärkungsfasern und
B. einer Gewebe- oder Gelege- Schicht aus Verstärkungsfasern,
wobei die Schichten A und B zusammengenadelt sind.

## Beschreibung

Die Erfindung betrifft einen thermoplastisch verarbeitbaren Verbundwerkstoff, enthaltend mindestens eine Faservliesschicht A aus Thermoplastfasern und eine Gewebe- oder Gelegeschicht B aus Verstärkungsfasern.

Thermoplastische Kunststoffe werden wegen ihres geringen Gewichtes in zunehmendem Maße zur Herstellung von Formteilen, insbesondere von Kraftfahrzeugteilen verwendet. Um ihnen eine ausreichende Festigkeit und Steifigkeit zu verleihen, werden sie gewöhnlich mit Verstärkungsfasern verbunden. So werden z.B. flächige Halbzeuge aus glasmattenverstärkten Thermoplasten ("GMT- Halbzeug") hergestellt durch Zusammenführen von Endlos- Glasfasermatten und Thermoplast-Schmelzebahnen und Konsolidieren auf einer Doppelbandpresse. Diese Arbeitsweise erfordert jedoch einen hohen Energieaufwand, da die zähflüssige Schmelze bei Drücken weit oberhalb von 1 bar in die Matte eingepresst werden muss. Außerdem sind nach diesem Verfahren in der Praxis nur Halbzeuge und damit auch Fertigteile mit einem Flächengewicht von mehr als 1500 g/m² herstellbar.

In der DE-A 36 14 533 ist ein Verfahren zur Herstellung von Formkörpern aus thermoplastischen Kunststoffen, die eine Verstärkungseinlage enthalten, beschrieben. Dabei wird in Anlehnung an die Textilfasertechnologie ein Mischvlies aus Thermoplastfasern und Verstärkungsfasern nach dem Krempel- oder Airlay-Verfahren hergestellt und durch Nadeln verfestigt. Zuschnitte aus diesem Mischvlies werden erwärmt und direkt zu Formkörpern verpresst. Zwischen zwei erwärmte Zuschnitte kann ein weiteres flächiges Substrat, z.B. ein Gittergewebe oder ein Stoffgewebe aufgelegt und mitverpresst werden. Dabei besteht aber die Gefahr, dass beim Handling, d.h., beim Transport oder beim Einlegen in die Presse die Lagen verrutschen.

Der Erfindung lag nun die Aufgabe zugrunde, einen thermoplastisch verarbeitbaren Verbundwerkstoff bereitzustellen, der einfach und mit geringem Energieaufwand herstellbar und problemlos handhabbar ist, und der zu einem Halbzeug oder gleich zu Fertigteilen, auch mit geringem Flächengewicht, verarbeitet werden kann.

Diese Aufgabe wird erfindungsgemäß gelöst durch einen thermoplastisch verarbeitbaren, flächigen Verbundwerkstoff, enthaltend
A. mindestens eine Faservliesschicht aus 10 bis 100 Gew.% Thermoplastfasern und und 0 bis 90 Gew.% Verstärkungsfasern mit einem Flächengewicht von 100 bis 2000 g/m² und
B. eine Gewebe- oder Gelegeschicht aus Verstärkungsfasern mit einem Flächengewicht von 100 bis 1000 g/m²,
wobei die Schichten A und B zusammengenadelt sind.

Die EP-A 697 275 beschreibt einen biegesteifen, flächigen Faserverbundwerkstoff aus einer Thermoplastmatrix und Verstärkungsfasern, bestehend aus zwei Deckschichten A aus Glasfasergewebe, das in eine Thermoplastmatrix eingebettet ist, und einer Kernschicht B aus der Thermoplastmatrix, die Glasfasern mit ungerichteter Faserorientierung enthalten kann.

Als Thermoplastfasern für die Faservliesschicht A kommen alle verspinnbaren thermoplastischen Kunststoffe in Frage, vorzugsweise Polypropylen mit einem MFI (230°C, 2.16 kp) von 25 bis 150 g/10 min, daneben aber auch Polyamide und lineare Polyester. Die Thermoplastfasern weisen im allgemeinen eine mittlere Länge von 20 bis 100 mm auf. Die Schicht A besteht vorzugsweise zu 100% aus Thermoplastfasern, es sind jedoch auch Mischvliese mit bis zu 90 Gew.%, insbesondere mit 40 bis 70 Gew.% Verstärkungsfasern geeignet. Bevorzugte Verstärkungsfasern sind Glasfasern, daneben sind aber auch Naturfasern, Aramidfasern und Fasern aus höher schmelzenden Polymeren geeignet. Die Verstärkungsfasern in der Schicht A weisen im allgemeinen eine mittlere Länge von 20 bis 200 mm auf. Damit sie gut mit den Thermoplastfasern mischbar sind, sollten sie als individuelle, nicht gebundene Fasern vorliegen. Das Faservlies der Schicht A wird nach dem Krempel- oder Airlay-Verfahren hergestellt. Dabei entsteht ein reines Thermoplastfaservlies oder ein Mischfaservlies mit einem Flächengewicht von 100 bis 2000 g/m², vorzugsweise von 300 bis 1000 g/m².

Die Schicht B ist vorzugsweise ein textiles Gewebe, z.B. ein Leinengewebe, ein Köpergewebe oder ein Drehergewebe; daneben sind auch Gelege aus parallelen Fasern geeignet. Die Verstärkungsfasern sind wieder vorzugsweise Glasfasern, daneben sind auch Aramidfasern, Naturfasem, Kohlenstofffasern, Basaltfasern und Fasern aus höher schmelzenden Polymeren geeignet, sowie Hybridfasern, z.B. aus Glasfasern und Polypropylenfasern. Die Fasern des textilen Gewebes oder Geleges liegen vorzugsweise als Faserbündel mit einem Titer zwischen 300 und 3000 tex vor. Die Schicht B hat ein Flächengewicht von 100 bis 1000 g/m², vorzugsweise von 200 bis 800 g/m².

Die bevorzugte Schichtenfolge ist A - B - A, wobei die beiden Schichten A auch verschieden dick sein können. Daneben ist auch die Schichtenfolge A - B möglich. Wesentlich ist, dass die Schichten A und B zusammengenadelt sind, damit beim Transport und bei der späteren Weiterverarbeitung die Lagen nicht verrutschen und beim Einlegen in die Pressform nur eine einzige Lage eingelegt werden muss. Außerdem werden durch das Nadeln die Faserbündel der Schicht B geöffnet, so dass beim Heißverpressen des Verbundwerkstoffs eine bessere Tränkung mit der Thermoplastschmelze der Schicht A erfolgen kann. Das Nadeln kann auf üblichen Nadelstühlen mit Filznadeln vorgenommen werden.

Zur Herstellung der erfindungsgemäßen Verbundwerkstoffe wird zunächst die Faservliesschicht A nach dem Krempel- oder Airlay- Verfahren hergestellt, wobei ein endloses Band erhalten wird. Die Schicht A wird dann kontinuierlich mit der Schicht B zusammengeführt und zusammengenadelt, wobei entweder zwischen zwei Lagen A eine Lage B eingeführt wird oder je eine Lage A und eine Lage B zusammengeführt werden.

Die Verbundwerkstoffe können direkt zu dreidimensionalen Fertigteilen in einer Form bei Temperaturen oberhalb des Erweichungspunktes des Thermoplasten verpresst werden. Man kann aber auch ein Halbzeug herstellen, indem der Verbundwerkstoff kontinuierlich durch Heißverpressen konsolidiert wird. Dies wird vorzugsweise auf einer Doppelbandpresse durchgeführt; man kann aber auch einen Kalander oder eine Kaschiereinrichtung verwenden. Das Halbzeug weist vorzugsweise eine Dicke von 0,5 bis 5,0, insbesondere von 1,0 bis 2,0 mm und ein Flächengewicht von 200 bis 3000, insbesondere von 300 bis 1500 g/m² auf. Es kann gelagert, transportiert und bei Bedarf zu Fertigteilen weiterverarbeitet werden. Man kann dieses Halbzeug oder auch direkt den unkonsolidierten Verbundwerkstoff als Decklagen mit leichten Kernlagen, z.B. aus Polypropylenschaumstoff- oder Honigwaben- Platten zu Sandwichteilen verbinden, entweder durch Verkleben oder durch Heißverpressen. Ferner ist es möglich, das Halbzeug mit GMT- oder LFT- Halbzeug zu verbinden.

Die aus den erfindungsgemäßen Verbundwerkstoffen hergestellten Fertigteile zeichnen sich durch eine hohe Festigkeit und Steifigkeit, sowie durch ein geringes Gewicht aus. Sie finden bevorzugt im Kraftfahrzeugbereich Verwendung, z.B. als Verstärkung für Reserveradmulden, Rückwandtüren, Stoßfänger oder Unterböden. Sandwichteile sind besonders leicht und hochsteif. Sie können z.B. als Ladeböden in Lastkraftwagen verwendet werden.

## Patentansprüche

1. Thermoplastisch verarbeitbarer, flächiger Verbundwerkstoff, enthaltend
A. mindestens eine Faservliesschicht aus 10 bis 100 Gew.% Thermoplastfasern und 0 bis 90 Gew.% Verstärkungsfasern mit einem Flächengewicht von 100 bis 2000 g/m² und
B. eine Gewebe- oder Gelegeschicht B aus Verstärkungsfasern mit einem Flächengewicht von 100 bis 1000 g/m²,
**dadurch gekennzeichnet, dass** die Schichten A und B zusammengenadelt sind.

2. Verbundwerkstoff nach Anspruch 1, **gekennzeichnet durch** die Schichtenfolge A - B - A.

3. Verbundwerkstoff nach Anspruch 1, **dadurch gekennzeichnet, dass** die Faservliesschicht zu 100% aus Thermoplastfasern besteht.

4. Verbundwerkstoff nach Anspruch 1, **dadurch gekennzeichnet, dass** die Faservliesschicht zu 30 bis 60 Gew.% aus Thermoplastfasern und zu 70 bis 40 Gew.% aus Verstärkungsfasern besteht.

5. Verbundwerkstoff nach Anspruch 1, **dadurch gekennzeichnet, dass** die Thermoplastfasern Polypropylenfasern sind.

6. Verbundwerkstoff nach Anspruch 1, **dadurch gekennzeichnet, dass** die Verstärkungsfasern in der Schicht B und gegebenenfalls in der Schicht A jeweils Glasfasern sind.

7. Verfahren zu Herstellung desVerbundwerkstoffs nach Anspruch 1, **dadurch gekennzeichnet, dass** zunächst die Faservliesschicht A nach dem Krempel- oder Airlay- Verfahren hergestellt wird, und dass dann kontinuierlich eine Gewebe- bzw. Gelegeschicht B mit einer oder zwei Schichten A zusammengeführt und zusammengenadelt wird.

8. Verwendung des Verbundwerkstoffs nach Anspruch 1 zur Herstellung von Fertigteilen durch Heißverpressen in einer Form.

9. Verwendung des Verbundwerkstoffs nach Anspruch 1 zur Herstellung eines flächigen Halbzeugs einer Dicke von 0,5 bis 5,0 mm durch Heißverpressen in einer Doppelbandpresse.

10. Verwendung des Verbundwerkstoffs nach Anspruch 1 als Decklage zur Herstellung von Sandwichteilen durch Verkleben oder Heißverpressen mit Polypropylen- Schaumstoffplatten oder Honigwaben- Platten als Kernlage.
